# EUROPEAN PATENT APPLICATION

(11) **EP 1 370 022 A1**
(43) Date of publication of application: **10.12.2003**
(21) Application number: 02712409.8
(22) Date of filing: 18.02.2002
(51) Int. Cl.: H04L 9/00

(54) **INFORMATION PROCESSING APPARATUS AND METHOD, AND STRORAGE MEDIUM**

(30) Priority: 13.03.2001 JP 2001070202
(71) Applicant: Sony Corporation, Tokyo 141-0001 (JP)
(72) Inventor: TOGAWA, Atsushi, Shinagawa-Ku, Tokyo 141-0001 (JP)
(74) Representative: Nicholls, Michael John
(86) International application number: JP0201338
(87) International publication number: WO02073871

(57) **Abstract**

A secure connection between the main unit of a portable information device and a peripheral device via a wireless network is ensured.

An electronic seal makes it possible to transmit an encryption key to a portable information terminal and a peripheral device thereof by an operation which is analogous to "seal affixing" by a user confirmed as an authorized user. For example, user confirmation is performed by an authentication technology using biometric information, such as "fingerprint authentication". After the portable information terminal and the peripheral device thereof perform mutual recognition, they can perform secure mutual communication via a wireless network, etc., by using the encryption key provided via the electronic seal.

## Description

### [Technical Field]

The present invention relates to an information processing apparatus and method for maintaining a normal operation among portable information devices and function expansion devices thereof, which are connected via a wireless network, and to a storage medium therefor and, in particular, it relates to an information processing apparatus and method for ensuring security among a plurality of devices which operate in cooperation via a wireless network, and to a storage medium therefor.

More specifically, the present invention relates to an information processing apparatus and method for ensuring security by securely transmitting a private key to each device connected via a wireless network, and to a storage medium therefor and, in particular, it relates to an information processing apparatus and method for ensuring security on a wireless network by permitting only the transmission of a private key by an authorized user, and to a storage medium therefor.

### [Background Art]

Along with improvements in semiconductor manufacturing technology, electronic devices have become increasingly smaller, and various types of portable information devices, such as notebook computers, PDAs (Personal Digital Assistants), and cellular phones have appeared. These types of portable information device are driven by the supply of electricity from a battery incorporated in the main unit of the device, and are used in a mobile environment, that is, outdoors or at the location of the user.

There has been an increasing demand for portable information devices to be equipped with various peripheral devices (for example, a position detecting device such as GPS (Global Positioning System), and user input/output devices such as a microphone, a speaker, a headset, and a keyboard) so as to expand the functions. Hitherto, it has been common practice to meet such needs for expanding the functionality of the main unit of the device by providing the main unit of the device with a space for housing and connecting peripheral devices, such as an expansion slot and a card slot. However, in order to maintain the portability, which is the most striking feature of portable information devices, the occupied volume, the weight, the power consumption, etc., of a device connected to the slot must be strictly limited. For this reason, the number of devices which can be connected to the main unit of the device is greatly limited, and thus it is not possible to satisfactorily meet the function expansion demanded by the user.

In order to avoid such a limitation, recently, it has been proposed that the expansion of functions be realized by the main unit of the device communicating with a peripheral device via a wireless network. When devices are wirelessly connected to one another, there are secondary effects, for example, there is no need to use cables and therefore the desktop remains tidy, and there is no mechanical damage of connectors due to the mounting/removal of devices.

When compared to a case in which connection among devices is made using cables, in a case where connection is made by a wireless network, the relationships regarding which portable information device corresponds to which peripheral device becomes difficult to keep track of. In particular, in a working environment where a plurality of portable information devices are clustered together, in order to maintain a normal operation in each information device even if a plurality of users come close to one another, a scheme whereby individual peripheral devices are capable of specifying the portable information device which is currently connected or the user thereof is necessary.

Though the portable information device has a high economic value due to its high-function computing performance, since it can be easily carried, the risk of encountering loss or theft is high. Therefore, sufficient care must be paid so that the security of the entire system is not degraded considerably.

In a working environment in which devices are connected to one another by a wireless network, including the case in which the functions of an information device are expanded, such user specification is required often. For example, in order that the information device is used as part of a cellular phone system, various technologies having functions for specifying a user while eliminating various types of abuse, including wiretapping, have already been proposed; however, their development is still in progress.

However, most existing techniques regarding the security of devices are presupposed on the intervention of special devices which provide network functions, for example, communication devices disposed in a base station. Due to such presupposed conditions, it is not possible to apply the above-described wireless network technology to security on a network which includes not only simple peripheral devices which simply operate in accordance with instructions from a portable information device, but also active devices capable of issuing instructions to another type of expansion device or portable information device.

When data communication is performed between two or more information devices, encryption technology is generally used. That is, a device on the transmission side sends transmission data after encrypting the data, and a device on the receiving side decrypts the received data, and thereafter, uses the data for further processing.

However, in order to use the encryption method, an encryption key must be shared between both devices.

In a usage environment where the connection relationship between devices is fixed and stationary, secure data communication can be realized relatively easily by providing an encryption key to be shared, to both devices at the transmission and receiving sides and by providing the encryption key securely at a place which is protected by means of hardware.

In contrast, the connection relationship between devices is not fixed, as with a portable information device and peripheral devices which expand the functions thereof, and for example, each time the user of the device moves, the connection relationship with the peripheral device varies dynamically. In such a usage environment where the connection relationship is dynamic and variable, the encryption key provided to the portable information device and the peripheral devices thereof (or the encryption key shared between the devices) is merely temporary, that is, it can be used only while the connection relationship continues, and when the next connection relationship is established, a new encryption key must be provided.

In a case where the encryption key is made to be valid in any connection relationship between devices, it is difficult to crack down on re-use of the encryption key, and the encryption key can no longer function as an encryption key.

Furthermore, if an unauthorized person can provide an encryption key to both a portable information device and a peripheral device for which a connection relationship is newly established, commonly called "posing" is permitted, and security on the wireless network is lost.

### [Disclosure of the Invention]

An object of the present invention is to provide a superior information processing apparatus and method which are capable of ensuring security among a plurality of devices which operate in cooperation via a wireless network, and a storage medium therefor.

Another object of the present invention is to provide a superior information processing apparatus and method which are capable of ensuring security by securely transmitting a private key to each device connected via a wireless network, and a storage medium therefor.

Another object of the present invention is to provide a superior information processing apparatus and method which are capable of ensuring security on a wireless network by permitting only the transmission of a private key by an authorized user, and a storage medium therefor.

The present invention has been made in view of the above-described problems. In a first aspect, the present invention provides an information processing apparatus or method for outputting an encryption key by an authorized user, the information processing apparatus or method comprising:
biometric information input means or step for inputting biometric information of a user;
encryption key generation means or step for generating an encryption key in response to a new input of biometric information;
encryption key registration means or step for storing the encryption key in such a manner as to be associated with the biometric information; and
encryption key output means or step for permitting the output of the encryption key as a result of the input biometric information matching the registered biometric information.

The biometric information referred to herein is, for example, the fingerprint of a user. Alternatively, other biometric information can be used from the human body of the user, such as the retina pattern, a voiceprint, or a pulse pattern.

In the encryption key output means or step, the encryption key is extracted from the encryption key registration means or step in response to the seal-affixing operation of bringing into contact with an output target device, and this encryption key is then output. According to such a seal-affixing operation, the private key can be transmitted to an external device such that interception from peripheral device is difficult.

According to the information processing apparatus or method in accordance with the first aspect of the present invention, the private key can be securely transmitted to an external device by a technique called an "electronic seal". The electronic seal referred to herein makes it possible to transmit the encryption key to a portable information terminal and a peripheral device thereof by operation analogous to "seal affixing" by a user confirmed as an authorized user.

User confirmation is performed by authentication technology using biometric information as in, for example, "fingerprint authentication". After the portable information terminal and the peripheral device thereof perform mutual recognition, it is possible to perform secure mutual communication via a wireless network, etc., by using an encryption key provided via operation of affixing a seal by an electronic seal.

The information processing apparatus or method in accordance with the first aspect of the present invention may further comprise an encryption key re-registration means or step for permitting the generation of the encryption key and the re-registration of the encryption key in the encryption key registration means or step. By permitting the registration of a fingerprint differing from the fingerprint authenticated in a previous step by the encryption key re-registration means or step, the electronic seal can be transferred to another user.

In a second aspect, the present invention provides an information processing apparatus or method for securely performing data communication with another device, the information processing apparatus or method comprising:
private key receiving means or step for receiving a private key authenticated on the basis of biometric information of a user;
mutual recognition means or step for performing mutual recognition of whether the other device with which communication is performed, possesses the same private key; and
data communication means or step for performing data communication, which is encrypted using the mutually recognized private key.

Here, in the private key receiving means or step, the private key may be transmitted among a plurality of devices in a state in which interception is impossible by receiving the private key in response to the seal-affixing operation of bringing into contact with the device on the private key output side. Since the private key can be shared securely among a plurality of devices by the seal-affixing operation, it is possible to perform secure data communication by a wireless network.

The mutual recognition means may perform mutual recognition by a technique of confirming the private key possessed by the other device without knowing the key itself.

In a third aspect, the present invention provides a storage medium having stored thereon in a computer-readable form, computer software described so as to execute processing for outputting an encryption key by an authorized user on a computer system, the computer software comprising:
a biometric information input step of inputting biometric information of a user;
an encryption key generation step of generating an encryption key in response to a new input of biometric information;
an encryption key registration step of storing the encryption key in such a manner as to be associated with the biometric information; and
an encryption key output step of permitting the output of the encryption key as a result of the input biometric information matching the registered biometric information.

In a fourth aspect, the present invention provides a storage medium having stored thereon in a computer-readable form, computer software described so as to execute processing for securely performing data communication with another device on a computer system, the computer software comprising:
a private key receiving step of receiving a private key authenticated on the basis of the biometric information of a user;
a mutually recognizing step of performing mutual recognition of whether a device which is a communication party possesses the same private key; and
a data communication step of performing data communication, which is encrypted using the mutually recognized private key.

The storage medium according to the third or fourth aspect of the present invention is a medium for providing various codes in a computer-readable form to, for example, a general-purpose computer system capable of executing various program codes. Such a medium is a removable, portable storage medium, such as a CD (Compact Disc), an FD (Flexible Disk), or an MO (Magneto-Optical Disc). Alternatively, the provision of computer software to a specific computer system via a transmission medium such as a network (it does not matter whether the network is wireless or wired) is technically possible.

Such a storage medium defines the structural or functional cooperative relationship between computer software and the storage medium for realizing the functions of predetermined computer software on a computer system. In other words, by installing predetermined computer software into a computer system via a storage medium according to the third or fourth aspect of the present invention, cooperative effects are exhibited on the computer system, and the same operational effects as those of the information processing apparatus and method in accordance with the first and second aspects of the present invention can be obtained.

Further objects, features and advantages of the present invention will become apparent from the following detailed description of the embodiments of the present invention with reference to the attached drawings.

### [Brief Description of the Drawings]

Fig. 1 is a block diagram schematically showing the functional configuration of an information processing apparatus 10 according to an embodiment of the present invention, which is capable of functioning as an "electronic seal".
Fig. 2 is a block diagram schematically showing the functional configuration of a portable information device 30 for which seal affixing by an electronic seal is to be received, and a peripheral device 50 which expands the functions thereof.
Fig. 3 is a flowchart showing a series of processing procedures for registering a user of the electronic seal and for generating a key for the user.

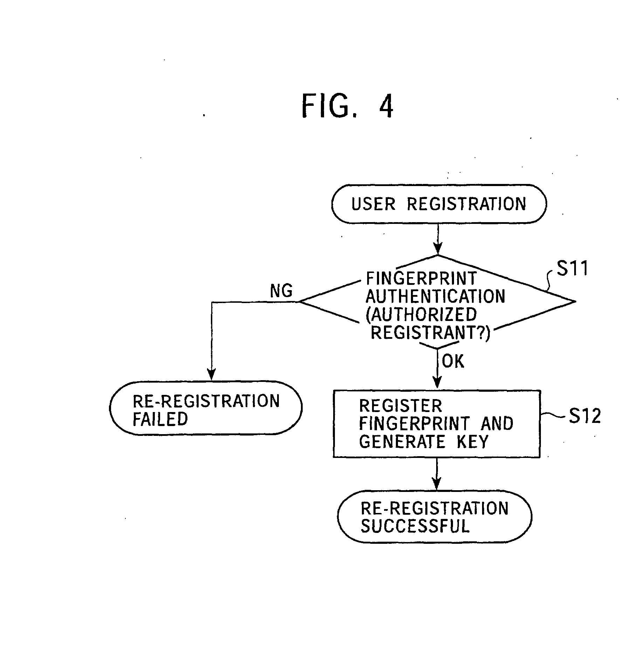

Fig. 4 is a flowchart showing a series of processing procedures for re-registering a user of the electronic seal and for generating a key for the user.
Fig. 5 is a flowchart showing a series of processing procedures which is executed between the information processing apparatus 10 and another device (the portable information device 30, the peripheral device 50, etc.), for performing a seal-affixing procedure.
Fig. 6 is a flowchart showing a processing procedure for examining the matching of a private key by Fiat-Shamir recognition.

### [Best Mode for Carrying Out the Invention]

Embodiments of the present invention will now be described below with reference to the drawings.

A "seal" in the real world has the function of confirming personal identification or certifying one's identity to other persons through the action of affixing of a seal. In comparison, the information processing apparatus of the present invention confirms that a user is an authorized user and functions as an "electronic seal" which outputs an encryption key possessed by the confirmed authorized user. The operation of outputting the encryption key of the authorized user is analogous to the person himself/herself who possesses a seal affixing it.

For this electronic seal, the encryption key can be transmitted to another device by an operation similar to "affixing of a seal" by the user confirmed as an authorized user. As technology for confirming an authorized user, authentication technology using biometric information, for example, "fingerprint authentication", can be applied. Examples of devices to which the encryption key is transmitted include a portable information device and peripheral devices which expand the functions thereof. These devices further perform mutual authentication between themselves, and thereafter, can ensure security of mutual communication via a wireless network, etc., by using the encryption key provided by the authorized user via the electronic seal.

The embodiments of the present invention will now be described below in detail with reference to the drawings.

### 1. System Configuration

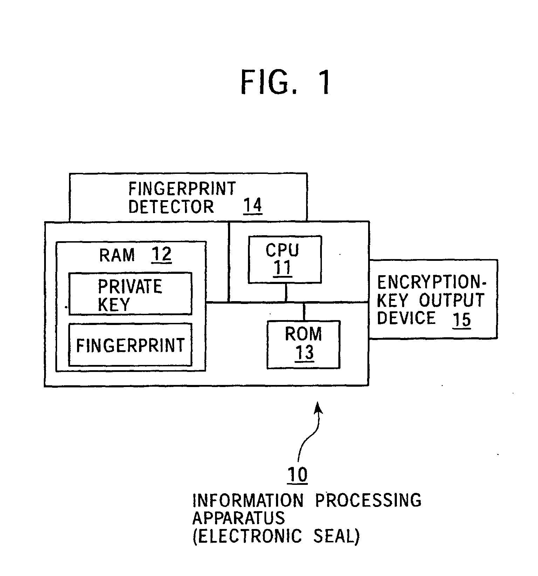

Fig. 1 is a block diagram schematically showing the functional configuration of an information processing apparatus 10 according to an embodiment of the present invention, which is capable of functioning as an "electronic seal". As shown in Fig. 1, the information processing apparatus 10 according to the embodiment of the present invention comprises a CPU (Central Processing Unit) 11, a RAM 12, a ROM 13, a fingerprint detector 14, and an encryption-key output device 15.

The CPU 11 is a central controller for centrally controlling the operation of the entire information processing apparatus 10 as an electronic seal, and realizes various processes by executing program code stored in the ROM (Read Only Memory) 13. Examples of processes executed by the CPU 11 include the following:
(1) Registration of user who uses the electronic seal,
(2) Generation of key for authorized user, and
(3) Affixing of seal using electronic seal.
These will be described later.

The RAM (Random Access Memory) 12 is a volatile memory through which reading and writing are possible, and is used to load program code executed by the CPU 11 and to temporarily store work data for an execution program. Examples of work data include fingerprints of persons for whom user registration is performed (or other biometric information used for an authentication process), and encryption keys generated for authorized users. The generated encryption key can be transmitted to the portable information device 30, the peripheral device 50, etc., by the action of "affixing a seal". This point will be described later.

The fingerprint detector 14 is, for example, a device for optically reading the fingerprint of the user of the electronic seal. The read fingerprint is used for user registration and for user confirmation. However, when biometric information other than the fingerprint is used for an authentication process, the fingerprint detector 14 may be replaced with another device.

The encryption-key output device 15 is a device for outputting an encryption key when it, as an electronic seal, affixes a seal in another device (a portable information device and/or a peripheral device thereof). For example, the encryption key can be securely transferred among a plurality of devices by the "seal-affixing" operation of bringing an encryption-key input device (to be described later) into contact with the encryption-key output device 15 for the electronic seal by which user registration and key generation have been performed.

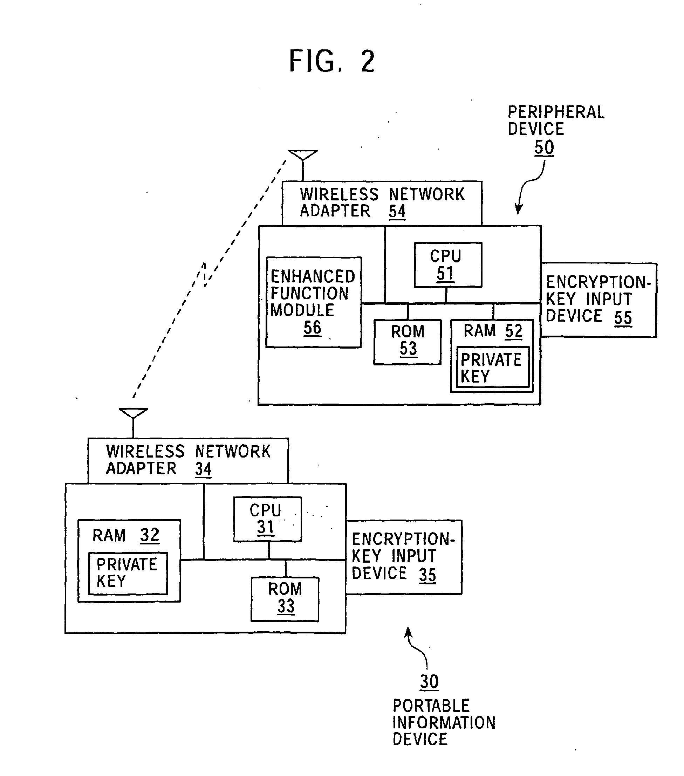

Fig. 2 schematically shows the functional configuration of the portable information device 30 for which affixing of a seal by an electronic seal is to be received, and the peripheral device 50 which is connected to this portable information device 30 via a network and which expands the functions thereof.

The portable information device 30 comprises a CPU 31, a RAM 32, a ROM 33, a wireless network adapter 34, and an encryption-key input device 35.

The CPU 31 is a central controller for centrally controlling the operation of the entire portable information device 30 under the control of the operating system (OS), and executes various processes by executing program codes stored in the ROM (Read Only Memory) 33, which is a read only memory, and another external storage device (not shown) such as a hard disk unit.

Examples of processes executed by the CPU 31 include various application programs such as word processing or spreadsheet calculations, processes of connection with the peripheral device 50 via a wireless network or another communication medium, and application processes using the connected peripheral device 50.

The RAM 32 is a volatile memory through which reading and writing are possible, and is used to load program code executed by the CPU 31 and to temporarily store work data for an execution program. Examples of work data stored in the RAM 32 include encryption keys (private keys) received via the encryption-key input device 35.

The wireless network adapter 34 is a function module for exchanging data by a short-distance wireless data communication function to and from the peripheral device 50. As a result of the connection of the peripheral device 50, the function expansion of the portable information device 30 is realized. Of course, in the portable information device 30, means other than the wireless network may be used, for example, a peripheral device may be loaded into, for example, an expansion slot, a card slot, etc., or a peripheral device may be connected via a cable.

The encryption-key input device 35 is a device for inputting an encryption key from the information processing apparatus 10 (described above) functioning as an electronic seal through the action of affixing a seal. The encryption key is ensured so as to be possessed by an authorized user for whom user registration has been performed, and can be used to perform secure data communication with the peripheral device 50 through the encryption of transmission data.

Of course, the portable information device 30 may incorporate various devices (not shown). For example, user input/output devices such as a display, a keyboard, and a mouse, and external storage devices such as a hard disk unit and a CD-ROM drive, may be provided.

On the other hand, the peripheral device 50 comprises a CPU 51, a RAM 52, a ROM 53, a wireless network adapter 54, an encryption-key input device 55, and an enhanced function module 56.

The CPU 51 is a central controller for centrally controlling the operation of the entire portable information device 50 under the control of the operating system (OS), and realizes various processes by executing program codes stored in the ROM (Read Only Memory) 53, which is a read only memory. Examples of processes executed by the CPU 51 include processes of connection with the main unit of the portable information device 30 via a wireless network or another communication medium, and function expansion services for the portable information device 30 by controlling the driving of the enhanced function module 56.

The RAM 52 is a volatile memory through which reading and writing are possible, and is used to load program code executed by the CPU 31 and to temporarily store work data for an execution program. Examples of work data stored in the RAM 52 include encryption keys (private keys) received via the encryption-key input device 55.

The wireless network adapter 54 is a function module for exchanging data by a short-distance wireless data communication function to and from the main unit of the portable information device 30. As a result of the connection of the portable information device 30, the peripheral device 50 can provide expansion functions provided by the enhanced function module 56 to the portable information device 30. Of course, means other than the wireless network may be used, for example, the peripheral device 50 may be.loaded into an expansion slot, a card slot, etc., of the main unit of the portable information device 30, or the peripheral device 50 may be connected to a portable information device via a cable.

Examples of expansion functions provided by the enhanced function module 56 to the main unit of the portable information device 30 include an external storage device function such as expansion memory, a hard disk, and a CD-ROM; a user input function such as a mouse and a pad; and a mutual connection function to a computer network, such as a network interface card (NIC). However, since the function expansion itself for information devices are not directly related to the subject matter of the present invention, no further description is given here.

### 2. User Registration and key Generation

In order to use this system, first, it is necessary for the user to register information for specifying the user himself/herself, such as the fingerprint (or other biometric information), in the information processing apparatus 10 which functions as an electronic seal.

The information processing apparatus 10 as an electronic seal stores the user specification information in the internal RAM 12 via the fingerprint detector 14, and at the same time, generates a random number, and stores this random number as the private key of that user in the RAM 12.

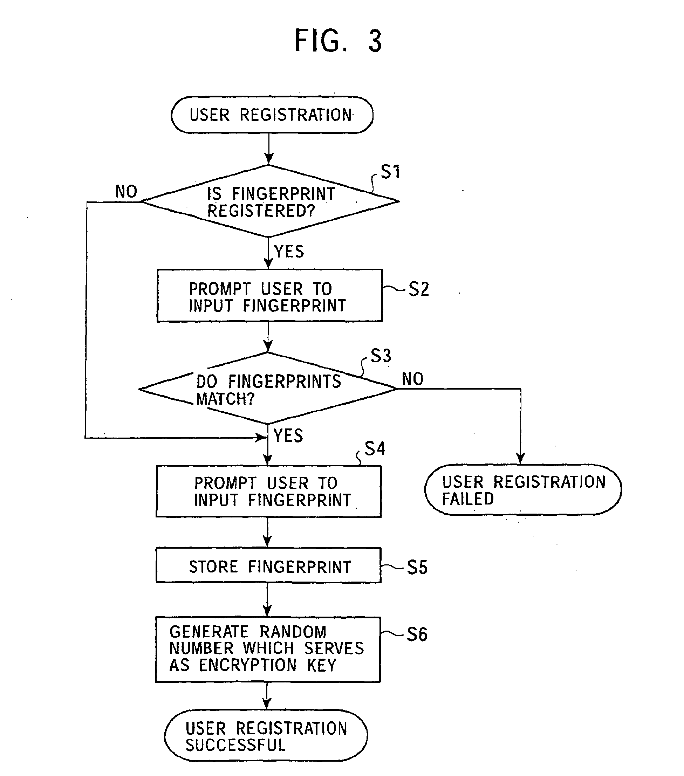

Fig. 3 shows, in a flowchart, a series of processing procedures for registering a user of the electronic seal and for generating a key of the user. In practice, this processing procedure can be implemented in such a form that the CPU 11 inside the information processing apparatus 10 executes predetermined program code. Referring to this flowchart, the user registration and key generation processes are described below.

Initially, it is determined whether or not the fingerprint has already been registered (step S1).

When the fingerprint has already been registered, the user is prompted to input a fingerprint (step S2). Then, it is determined whether or not the fingerprint read via the fingerprint detector 14 matches the registered fingerprint (step S3). If they do not match, it is assumed that the user registration has failed, and the entire processing routine is terminated.

On the other hand, if the fingerprint is not yet registered or if the input fingerprint matches the registered fingerprint, the user is further prompted to input a fingerprint (step S4), and this fingerprint is stored in the RAM 12 (step S5).

Then, a random number, which serves as an encryption key, is generated, this is stored in such a manner as to be associated with the fingerprint (step S6), and the entire processing routine is terminated.

In the information processing apparatus 10 according to this embodiment, it is possible to register a fingerprint and generate a key again after the fingerprint registration and the key generation are performed once. In this case, designing may be made so that the fingerprint is registered in the same processing procedure as that at the first time. However, by designing so as to register the fingerprint in the processing procedure described below, security can be improved further.

Initially, whether or not the registrant is an authorized user is confirmed by fingerprint authentication (step S11).

Next, fingerprint registration and key generation are performed (step S12).

Here, designing may be made so that registration of a fingerprint differing from the fingerprint authenticated in the procedure which has already been described with reference to Fig. 3 is permitted. By permitting this registration, it becomes possible to transfer the electronic seal to another person.

Furthermore, by forming a plurality of pieces of user specification information in such a manner as to be stored in the information processing apparatus 10, it is also possible to realize an electronic seal which can be shared in a group.

### 3. Affixing of Seal

The information processing apparatus 10, in which user registration and key generation have been performed, is able to output an encryption key from the encryption-key output device 15 thereof. Each of the portable information device 30 and the peripheral device 50 becomes usable by bringing the encryption-key input device 35/55 into contact with the encryption-key output device 15 on the information processing apparatus 10 side. Such operation of exchanging an encryption key between the encryption-key output device 15 and the encryption-key input device 35/55 is called a "seal affixing" in this specification.

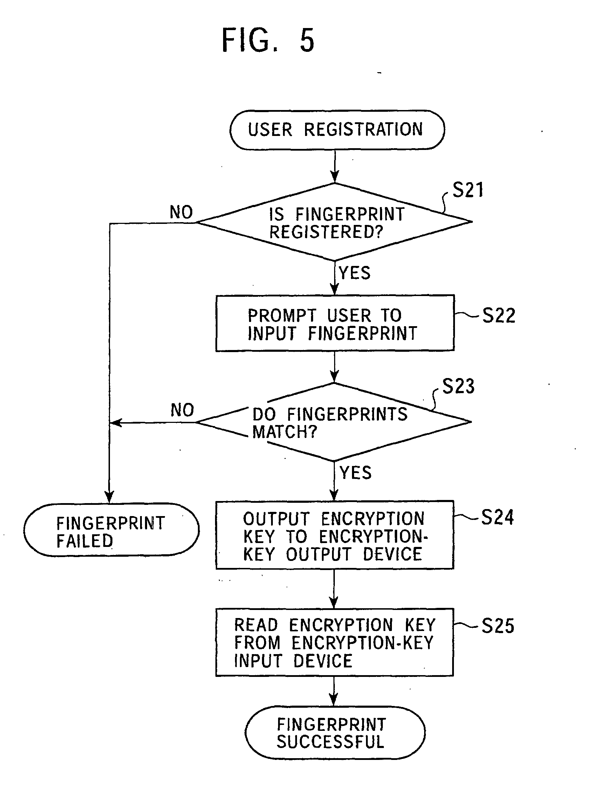

Fig. 5 shows, in a flowchart, a processing procedure, which is executed between the information processing apparatus 10 and another device (the portable information device 30, the peripheral device 50, etc.), for performing this seal-affixing procedure. The seal-affixing procedure will be described below with reference to this flowchart.

In the information processing apparatus 10, initially, whether or not the current operator has been properly registered as a user, that is, whether or not the fingerprint has already been registered, is determined (step S21). If the fingerprint is not registered, assuming that the seal-affixing procedure has failed, the entire processing routine is terminated.

When the fingerprint has already been registered, the operator is further prompted to input a fingerprint (step S22). Then, it is determined whether or not the fingerprint read via the fingerprint detector 14 matches the registered fingerprint (step S23). If they do not match, by assuming that the seal-affixing procedure has failed, the entire processing routine is terminated.

On the other hand, when the input fingerprint matches the registered fingerprint, the encryption key corresponding to this fingerprint is extracted from the RAM 12, and this is output from the encryption-key output device 15 onto a device for which seal affixing is to be performed (step S24).

In the device for which seal affixing is to be performed (for example, the portable information device 30 and the peripheral device 50), the seal-affixed encryption key is read from the encryption-key input device 35/55, and this is stored in the RAM 32/52 (step S25).

The portable information device 30 and the peripheral device 50 are able to perform secure data communication via a wireless network by encrypting the transmission data using the encryption key obtained by such a seal-affixing process.

In the manner described above, when affixing a seal, the information processing apparatus 10 as an electronic seal confirms that the person who is going to affix a seal is an authorized user by using technology such as fingerprint authentication. Then, the encryption key is transmitted to each device such as the portable information device 30 and the peripheral device 50.

Here, the transmission of the encryption key must be performed by a method in which interception from another (unauthorized) device is difficult. For this purpose, a technique of transmitting the private key by bringing them into contact with each other rather than by wireless communication is preferred. However, as long as transmission in which interception is difficult is possible, of course, the encryption key may be transmitted by a method other than seal affixing, including wireless communication.

The operation of "affixing a seal" is performed to transmit the private key to each device. However, in a particular device, when performing an operation which may cause a significant result, an embodiment may be conceived in which such a seal-affixing operation is used to confirm again that the user is an authorized user by making a request to the user. In such a case, there is no particular need to update the private key stored in the RAM 12 of the information processing apparatus 10 as the electronic seal.

Furthermore, the information processing apparatus 10 may be configured so that a plurality of private keys can be registered. In this case, it is possible to add a new private key by affixing a seal of the owner of the device and by performing a user addition operation (a seal-affixing operation by a user other than the owner).

### 4. Mutual Recognition

After the seal-affixing operation is performed, when information is transmitted between devices such as the main unit of the portable information device 30 and the peripheral device 50, it is mutually confirmed that they possess the same private key. This confirmation is performed by using a recognition processing technique in which it is difficult to know the private key by intercepting communication of them as in a private key matching examination technique by challenge/response sequence and zero-knowledge interactive proof.

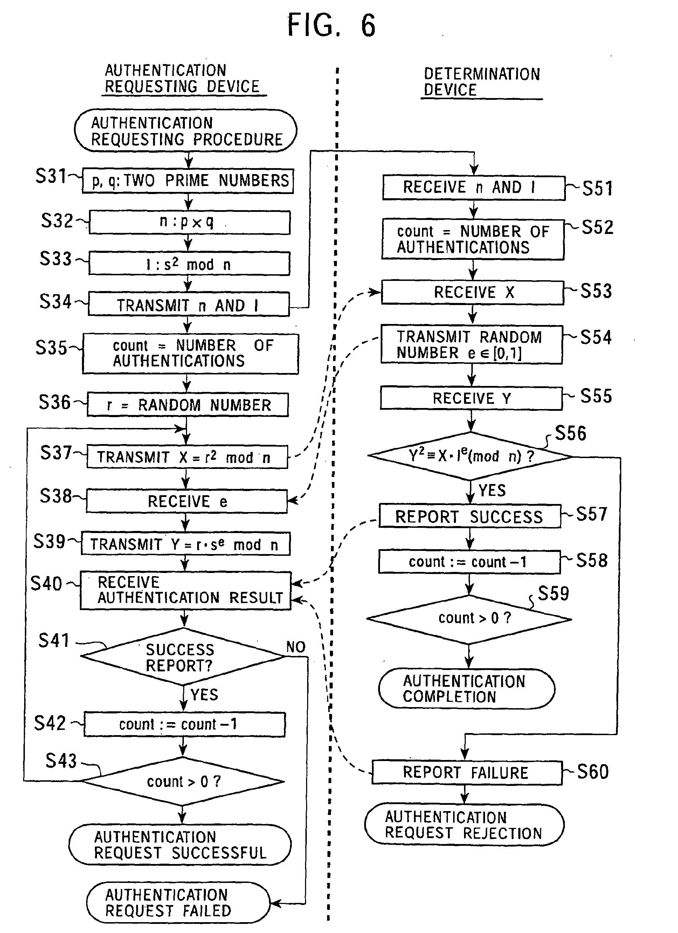

Fig. 6 shows, in a flowchart, a processing procedure for examining the matching of the private key. Here, the Fiat-Shamir recognition is applied. The two devices which are going to perform communication are able to confirm that another device possesses the private key by mutually performing the procedure shown in Fig. 6 on the other device.

Initially, on the authentication requesting device side, two prime numbers of p and q are generated (step S31), and the product n (= p × q) of them is computed (step S32).

Furthermore, the remainder I produced by dividing the private key S squared with n is determined (step S33), and n and I are transmitted to the determination device (step S34). Then, the number of authentications is substituted in the counter value count (step S35).

Next, a random number r is generated (step S36), and the remainder *x* produced by dividing the squared random number r by n is transmitted to the determination device (step S37) .

On the other hand, on the determination device side, when n and I transmitted in step S34 are received (step S51), the number of authentications is substituted in the counter value count (step S52).

Furthermore, when X transmitted in step S37 is received (step S53), a random number e∈ [0, 1] is generated, and this is transmitted to the authentication requesting device (step S54) .

On the authentication requesting device side, when the random number e is received (step S38), the remainder Y produced by dividing the random number r multiplied by the encryption key raised to the e-th power by n, is determined, and this remainder Y is transmitted to the determination device side (step S39).

In the determination device, when Y is received (step S55), a check is made to determine whether or not Y squared is equal to the remainder produced when X multiplied by I raised to the e-th power is divided by n (step S56). If they are not equal, failure is reported to the authentication requesting device (step S60), and the authentication request is rejected.

On the other hand, if Y squared is equal to the remainder produced when X multiplied by I raised to the e-th power is divided by n, the determination device reports success to the authentication requesting device (step S57). Then, the counter value count is decreased by 1 (step S58). If the count is still a positive value, the process returns to step S52, where processes similar to those described above are repeatedly performed. If the count reaches 0, the entire recognition processing routine is terminated.

On the authentication requesting device side, when the authentication result is received in step S57 or S60 (step S40), it is determined whether or not this is a success report (step S41).

When the authentication result is a failure report, by assuming that the authentication request has failed, the entire processing routine is terminated.

On the other hand, when the authentication result is a success report, the counter value count is decreased by 1 (step S42). If the count is still a positive value, the process returns to step S36, where processes similar to those described above are repeatedly performed (step S43). If the count reaches 0, the entire recognition processing routine is terminated.

### 5. Mutual Communication

When the above-described mutual authentication process is successful, it is ensured that the two devices possess the common private key. Thereafter, by encrypting communication using this private key, security of data communication can be maintained.

For this encryption, various shared key encryption methods, including the DES (Data Encryption Standard) encryption certified as standard encryption by the U.S. National Institute of Standards and Technology can be applied.

### Further Information

In the foregoing, the present invention has been described in detail while referring to the specific embodiments. However, it is self-explanatory that a person skilled in the art can modify or substitute the embodiments without departing from the spirit and the scope of the invention.

In this specification, a description has been given by using, as an example, a case in which the present invention is applied to a wireless network in which portable information devices and peripheral devices thereof are connected to one another; however, the subject matter of the present invention is not limited to this. For example, the present invention can exhibit the same operational effects even in a case where other types of information devices are connected to one another or devices are connected to one another by using a communication medium other than a wireless network.

In addition to the embodiments shown as examples in this specification, an electronic seal can be implemented. For example, a central device such as a portable information device, and an electronic seal can be configured so as to be integrated. For example, when the master and slave relationship between devices is clear as a PDA (Personal Digital Assistant) and a peripheral device connected to the PDA, the convenience can be improved by incorporating the function of the above-described electronic seal in the PDA.

Alternatively, a device having a specific function and an electronic seal can be configured so as to be integrated. Conversely, the function of an electronic seal can also be incorporated in a peripheral device. For example, a modification is conceived in which a retina pattern identification device is incorporated in a sensor device for tracking the line of sight, and this is made to have the function of an electronic seal.

Furthermore, a modification in which a private key is transmitted by a technique other than contact with devices is conceived. That is, as long as it is a technique in which interception from an external source is difficult, the devices need not necessarily to be brought into contact with each other. For example, it is conceived that a private key is transmitted by using a human body as a transmission path. (The device itself in which a human body is used as a transmission path has already been realized. For example, the Japanese Unexamined Patent Application Publication No. 7-170215 which has already been transferred to the present applicant discloses a configuration in which, in two mutually independent systems having electrodes, a very weak radio wave of such a degree as to be insufficient for communication just the way it is is transmitted between systems, and as a result of the intervention of a human body between the systems, transfer of data between the systems is performed through the intervention of the human body).

In summary, the present invention has been disclosed in an illustrative form, and is not intended to be construed as restrictive. In order to define the gist of the present invention, the section of CLAIMS noted at the beginning of the Description should be referred to.

### [Industrial Applicability]

According to the present invention, it is possible to provide a superior information processing apparatus and method which are capable of ensuring security among a plurality of devices which operate in cooperation via a wireless network, and a storage medium therefor.

According to the present invention, it is possible to provide a superior information processing apparatus and method which are capable of ensuring security by securely transmitting a private key to each device connected via a wireless network, and a storage medium therefor.

According to the present invention, it is possible to provide a superior information processing apparatus and method which are capable of ensuring security on a wireless network by permitting only the transmission of a private key by an authorized user, and a storage medium therefor.

By using the information processing apparatus according to the present invention as an "electronic seal" for transmitting an encryption key by an authorized user, it is possible to configure a group of devices in which a plurality of users use a wireless network independently of one another within a narrow range in which these are connected by, for example, short-distance wireless data communication.

According to the present invention, since communication among devices can be encrypted using a private key which is provided securely, an unauthorized person cannot know the communication contents (that is, intercept) unless the private key is stolen. It is during "seal affixing" that this private key is transmitted among devices. Since only an authorized owner is ensured to affix a seal by applying the authentication technique using biometric information such as fingerprint, it is very difficult to transmit the private key to the device provided by an unauthorized person who tries to intercept, and security of data communication can be ensured.

Even if the information processing apparatus according to the present invention functioning as an "electronic seal" is stolen, interception can easily be prevented by the authorized user performing fingerprint registration, key generation, and seal affixing.

In the present invention, since a function for specifying an authorized user by using biometric information as in fingerprint authentication is provided, it is impossible to affix a seal to another device by using the stolen electronic seal. Furthermore, even if the stolen electronic seal is disassembled and the information stored in the memory can be analyzed, interception and unauthorized use can be easily prevented by the authorized user performing fingerprint registration, key generation, and seal affixing again.

By using the information processing apparatus according to the present invention as an electronic seal, other devices such as portable information devices and peripheral devices need not to be provided with means for confirming that a user is an authorized user.

## Claims

1. An information processing apparatus for outputting an encryption key by an authorized user, said information processing apparatus comprising:
biometric information input means for inputting biometric information of a user;
encryption key generation means for generating an encryption key in response to a new input of biometric information;
encryption key registration means for storing the encryption key in such a manner as to be associated with the biometric information; and
encryption key output means for permitting the output of the encryption key as a result of the input biometric information matching the registered biometric information.

2. An information processing apparatus according to Claim 1, wherein said biometric information is a fingerprint of the user.

3. An information processing apparatus according to Claim 1, wherein said encryption key output means extracts the encryption key from said encryption key storage means and outputs the encryption key in response to a seal-affixing operation of bringing into contact with an output target device.

4. An information processing apparatus according to Claim 1, further comprising encryption key re-registration means for permitting the generation of the encryption key and the re-registration thereof in said encryption key registration means.

5. An information processing apparatus for securely performing data communication with another device, said information processing apparatus comprising:
private key receiving means for receiving a private key authenticated on the basis of biometric information of a user;
mutual recognition means for performing mutual recognition of whether the other device with which communication is performed, possesses the same private key; and
data communication means for performing data communication, which is encrypted using the mutually recognized private key.

6. An information processing apparatus according to Claim 5, wherein said private key receiving means receives the private key in response to a seal-affixing operation of bringing into contact with a device on a private key output side.

7. An information processing apparatus according to Claim 5, wherein said mutual recognition means performs mutual recognition by a technique of confirming the private key possessed by the other device without knowing the key itself.

8. An information processing method for outputting an encryption key by an authorized user, said information processing method comprising:
a biometric information input step of inputting biometric information of a user;
an encryption key generation step of generating an encryption key in response to a new input of biometric information;
an encryption key registration step of storing the encryption key in such a manner as to be associated with the biometric information; and
an encryption key output step of permitting the output of the encryption key as a result of the input biometric information matching the registered biometric information.

9. An information processing method according to Claim 8, wherein said biometric information is a fingerprint of the user.

10. An information processing method according to Claim 8, wherein, in said encryption key output step, the encryption key stored in said encryption key registration step is output in response to a seal-affixing operation of bringing into contact with an output target device.

11. An information processing method according to Claim 8, further comprising an encryption key re-registration step of permitting the generation of the encryption key and the re-registration thereof as a result of the input biometric information matching the registered biometric information.

12. An information processing method for securely performing data communication with another device, said information processing method comprising:
a private key receiving step of receiving a private key authenticated on the basis of biometric information of a user;
a mutual recognition step of performing mutual recognition of whether another device with which communication is performed, possesses the same private key; and
a data communication step of performing data communication, which is encrypted using the mutually recognized private key and.

13. An information processing method according to Claim 12, wherein, in said private key receiving step, the private key is received in response to a seal-affixing operation of bringing into contact with a device on a private key output side.

14. An information processing method according to Claim 12, wherein, in said mutual recognition step, mutual recognition is performed by a technique of confirming the private key possessed by the other device without knowing the key itself.

15. A storage medium having stored thereon in a computer-readable form, computer software described so as to execute processing for outputting an encryption key by an authorized user on a computer system, said computer software comprising:
a biometric information input step of inputting biometric information of a user;
an encryption key generation step of generating an encryption key in response to a new input of biometric information;
an encryption key registration step of storing the encryption key in such a manner as to be associated with the biometric information; and
an encryption key output step of permitting the output of the encryption key as a result of the input biometric information matching the registered biometric information.

16. A storage medium having stored thereon in a computer-readable form, computer software described so as to execute processing for securely performing data communication with another device on a computer system, said computer software comprising:
a private key receiving step of receiving a private key authenticated on the basis of the biometric information of a user;
a mutually recognizing step of performing mutual recognition of whether a device of a communication party possesses the same private key; and
a data communication step of performing data communication, which is encrypted using the mutually recognized private key.
